# EUROPÄISCHE PATENTSCHRIFT

(11) **EP 2 500 124 B1**
(45) Veröffentlichungstag und Bekanntmachung des Hinweises auf die Patenterteilung: **11.09.2013**
(21) Anmeldenummer: 12001637.3
(22) Anmeldetag: 09.03.2012
(51) Int. Cl.: B23D 45/02, B23D 59/00

(54) **Kreissägemaschine zum Teilen von Profilstangen**
Circular saw machine for dividing profile rods
Machine à scier circulaire destinée à séparer des barres profilées

(30) Priorität: 15.03.2011 CZ 20110131
(43) Veröffentlichungstag der Anmeldung: 19.09.2012
(73) Patentinhaber: ExactCut s.r.o., 62700 Brno (CZ)
(72) Erfinder: Leinveber, Rostislav, 62800 Brno (CZ)
(74) Vertreter: Markes, Libor

(56) Entgegenhaltungen:
- WO-A1-95/21043
- DE-A1- 4 007 552
- DE-U1- 29 811 101

## Beschreibung

### Gebiet der Technik

Die Erfindung betrifft eine Kreissägemaschine, die mit einem Vorschub des Sägeblatts in der waagerechten und in der senkrechten Richtung versehen ist.

### Bisheriger Stand der Technik

Die Profilstangen oder Rohre werden auf Trennmaschinen geteilt, die in der Regel durch einen Tisch gebildet sind, auf dem die Stangen in Richtung z zum Teilen vorgeschoben werden und während der Teilung darauf gespannt sind. Weiterhin ist die Maschine durch eine Säge gebildet, deren Sägeblatt entweder in der senkrechten Richtung *y* oder in der waagerechten Querrichtung x oder schräg in der *xy*-Ebene vorgeschoben wird. Bei diesen Maschinen ist häufig nicht zu vermeiden, dass das Sägeblatt eine Kante des zu teilenden Profils antastet. Dabei kommt es zu einer Schwingung des Sägeblatts, was seine Betriebsdauer sowie die Qualität des Schnitts beeinträchtigt. Das in der Patentschrift US 4,691,601 beschriebene Verfahren setzt sich zum Ziel, die Folgen dieses Effekts dadurch zu mildern, dass die Schwingung des Sägeblatts im Schnitt überwacht wird, und die Drehzahl und der Anpressdruck werden an die festgelegten Werte angepasst.

Es sind Trennmaschinen bekannt, die den Vorschub des Sägeblatts in zwei aufeinander senkrechten Richtungen ermöglichen, je nach Wahl entweder in der waagerechten *x*-Richtung oder in der senkrechten *y*-Richtung. Solche Maschinen sind in den Schriften EP 947 272 und CN 2250831 Y beschrieben. Bei diesen Maschinen kann das Sägeblatt an das Profil z.B. in der *x*-Richtung angefahren werden, bis sich die Achse des Sägeblatts in der senkrechten Achse des Profils befindet, und das Anschneiden außerhalb der Kante stattfindet. Und dann folgt das Teilen in der senkrechten y-Richtung. Dadurch kann man zwar die Schwingung des Sägeblatts beim Antasten des Profils vermeiden, jedoch ändert sich die Schnittbreite sprunghaft, was besonders bei gegliederten Profilen vorkommt. Das hat eine ungleichmäßige Beanspruchung des Sägeblatts und des Antriebs zur Folge. Die Vorschubgeschwindigkeit ist außerdem der größten Schnittbreite anzupassen, was die notwendige Zeit zum Verschneiden des Profils verlängert. Der größten Schnittbreite ist auch die Breite des Sägeblatts anzupassen, was zur Verlust des Materials in Form von Spänen und zu einem erhöhten Energieverbrauch führt.

Eine in der RU 221799 beschriebene, zum Teilen von Rundholz bestimmte Maschine ist mit zumindest einem Sägeblatt ausgestattet, das an einem an dem Rundholz entlang gleitenden Schlitten angebracht ist. Die einzelnen Schritte der Bewegung des Schlittens und des Sägeblatts werden von einem Steuerpult nach einem Leitprogramm gesteuert.

Eine Maschine zum Beschneiden und Nuten von Holzbauplatten nach EP 1074326 besitzt eine Sägescheibe und eine Nutenscheibe, die an einem entlang des Tisches mit angespannten Platten gleitenden Schlitten angebracht sind. Die beiden Scheiben können entlang ihrer Achsen, also quer zur Vorschubrichtung des Schlittens verschieben werden. Die Bewegung des Schlittens und der Scheiben wird von einer Steuereinheit gesteuert. Auch die beiden zuletzt erwähnten Maschinen lösen das Problem eines gleichmäßigen Schneidens nicht, das beim Holzverarbeiten eigentlich nicht vorkommt.

Die in der DE 4007552 vereinbarte Kaltkreissäge hat einen das Sägeblatt lagernden Schlitten, der Parallel zur Sägeblattebene durch einen Antrieb hin- und her fahrbar ist und durch Steuermittel in der Weise angetrieben ist, dass zwischen der Grundstellung und dem Beginn des Arbeitsvorschubes mit hoher Vorschubgeschwindigkeit, und während der Zerspanung mit niedriger Arbeitsvorschubgeschwindigkeit gefahren wird. Bei dieser Kreissäge sind Mittel vorgesehen, die die genauen Stellungen des Schlittens ermitteln und in einen Rechner eingeben, und der Schlittenantrieb durch den Rechner in der Weise steuerbar ist, dass die erforderlichen Schlittenstellungen und -geschwindigkeiten erreichbar sind. Der Vorteil dieser Lösung liegt darin, dass der Vorschubweg des Sägeblatts auf eine einfache Art und Weise vorbestimmt werden kann, ohne dass in irgendeiner Art in die Sägemaschine eingegriffen werden muss. Aus den Patentansprüchen, der Beschreibung und der Zeichnung geht hervor, dass die Bahn des Sägeblatts beim eigentlichen Zerschneiden der Profilstange gradlinig ist, wobei die manchmal sprunghaften Änderungen der Schnittbreite und der damit verbundenen Angriffskraft dadurch gemeistert werden, dass die Steuerung die Vorschubgeschwindigkeit bzw. die Drehzahl des Sägeblatts adäquat ändert. Bei solchem Verfahren wird zwar das Sägeblatt geschont und die Schnittqualität gewährleistet, die Zertrennungszeit liegt jedoch, besonders beim Trennen von Profilstangen, nicht beim optimalen Wert.

In der Patentschrift EP 743889 (WO 95/21043) wird eine Vorrichtung zum Abschneiden von Materialproben von einem Probekörper beschrieben, die ein von einem Schneidmotor angetriebenes Schneidrad und Zustellmittel zum Zustellen des Schneidrades relativ zu dem Probekörper oder umgekehrt umfasst. In dieser Vorrichtung umfassen die Zustellmittel zum Zustellen des Schneidrades in einer zu dem Rad parallelen Richtung einen Schrittmotor, dem Stromimpulse von einem zugeordneten Schrittmotortreiber zugeführt werden. Diese Vorrichtung ermöglicht, die Parameter des Schneidevorgangs, d.h. Zustellkraft, Zustellgeschwindigkeit des Schneidrades und dessen Umdrehungen schrittweise zu ändern, um eine hohe Qualität der Probe zu erzielen. In dieser Vorrichtung bewegt sich das Schneidrad relativ zum Probekörper in einer kreisförmigen, oder in einer Nebenausführung in einer geradlinigen Bahn, die keineswegs während des Schneidens variabel ist.

Es ist offensichtlich, dass keine der erwähnten, sich im Stand der Technik befindlichen Vorrichtungen ermöglicht, die Bahn des Sägeblatts dem optimalen Schnittbreitenverlauf anzupassen.

Der Erfindung liegt die Aufgabe zugrunde, eine Kreissägemaschine zu entwerfen, die im Vergleich zu den bekannten Maschinen ein effizienteres Trennverfahren von Profilstangen bei einer konstanten Drehzahl des Sägeblatts und einer quasikonstanten Vorschubgeschwindigkeit ermöglicht.

### Darstellung der Erfindung

Erfindungsgemäß wird die Aufgabe durch eine mit einem Vorschub des Sägeblatts in der Sägeblattebene entlang der Achsen *x*, *y* versehene Kreissägemaschine zum Teilen von Profilstangen gelöst, die mit einer programmierbaren Steuerung unabhängiger Vorschübe des Sägeblatts in der Sägeblattebene entlang der Achse *x* und enltang der Achse *y* ausgestattet ist, wobei in einem Speicher der Steuerung eine, für das zu teilende Profil optimale Schneideingriffskurve der Achse des Sägeblatts in *x*,*y*-Koordinaten gespeichert ist.

In einer vorteilhaften Ausführung ist ein Datenbestand von Schneideingriffskurven des Sägeblatts für marktgängige Typen und Größen der Profile in dem Speicher der programmierbaren Steuerung gespeichert, und die Steuerung ist mit einem Steller zur Wahl einer dem zu teilenden Profil entnsprechenden Kurve versehen.

### Kurze Beschreibung der Abbildungen

Die Erfindung wird nachstehend anhand von einem Ausführungsbeispiel näher erläutert. In der Zeichnung zeigt:
Fig. 1 eine Tischtrennmaschine mit einem Sägeblatt in Seitenansicht,
Fig. 2 und 3 veranschaulichen das Trennen eines I-Profils mit einer
   Kreissägemaschine, die erfindungsgemäß ausgestattet ist, und zwar Fig. 2 die einzelnen Phasen beim Zerschneiden eines stehenden und
Fig. 3 eines liegenden I-Profils.

### Ausführungsbeispiele der Erfindung

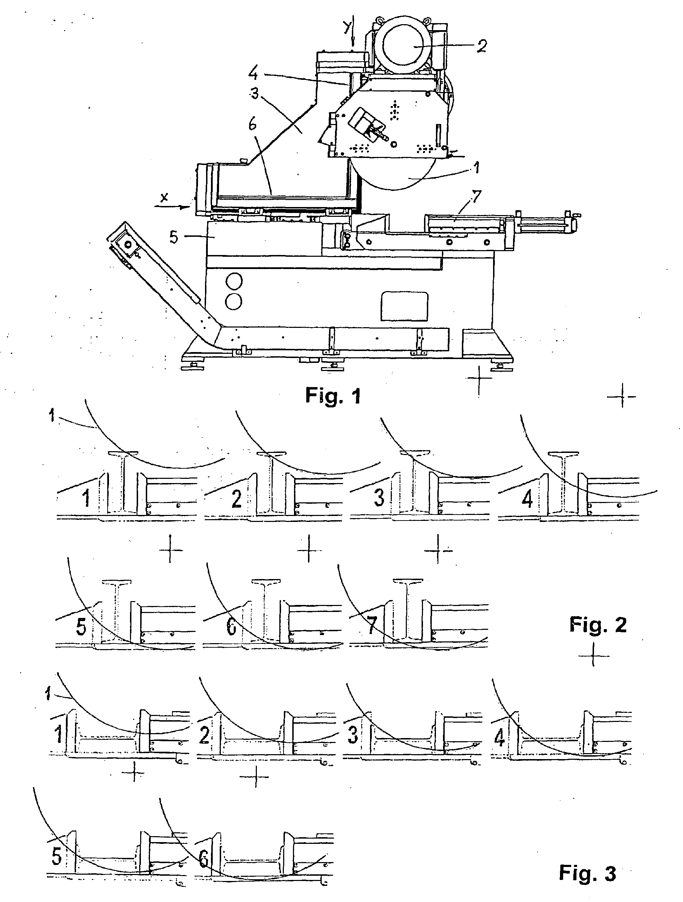

Eine erfindungsgemäße Kreissägemaschine, nach Fig. 1 in einer Tischausfertigung, hat ein mit einem Antrieb **2** versehenes Sägeblatt **1** an einer Führung **4** eines Rahmens **3,** beweglich in der y-Richtung angebracht. Der Rahmen **3** ist an einer Führung **6** eines Tisches **5** beweglich in der *x*-Richtung gelagert. Auf dem Tisch **5** befindet sich ein Spannmittel **7,** das zum Spannen einer Profilstange während des Schneidvorgangs dient. Die Säge verfügt über einen selbstständig betriebenen Vorschub in die *x*-Richtung und über einen in die *y*-Richtung. Die Vorschubantriebe sind mit einer programmierbaren Steuerungseinheit der Säge durchgeschaltet, die den unabhängigen Vorschub des Sägeblatts **1** entlang der Achse *x* und entlang der Achs *y* steuert.

Die programmierbare Steuerungseinheit ist mit einem Speicher ausgestattet, der zum Speichern einer Datei von Vorschubkurven dient, und der einen Steller für die Wahl der Kurve besitzt, die dem zu trennenden Profil entspricht.

Vor dem Anlegen eines Profils in das Spannmittel **7** wird eine optimale Kurve für die Bewegung des Sägeblatts **1** mittels einer Positioniereinrichtung gefunden, also eine Sequenz von optimalen Lagen des Sägeblatts **1** während des Trennens des Profils (falls diese Kurve noch im Speicher fehlt). Dann wird diese Kurve gespeichert. Die Kurve wird so bestimmt, dass der Anschnitt womöglich außerhalb der Kante des Profils liegt und die Schnittbreite während des Trennens womöglich konstant bleibt. Fig. 2 stellt ein in 7 Phasen geteiltes Verfahren zum Trennen eines stehend aufgenommenen 150 mm I-Profils dar, dagegen ist auf Fig. 3 das Durchtrennen desselben liegenden Profils in 6 Phasen veranschaulicht. Im ersten Fall beträgt die Schnittbreite während des Schneidens ca 34 mm, während die maximale Schnittbreite beim senkrechten Schneiden 82 mm betragen würde. Im zweiten Fall ist der Unterschied noch deutlicher: Beim erfindungsgemäßen Verfahren beträgt die Schnittbreite ca 44 mm, während sie beim senkrechten Schneiden 155 mm betragen würde.

Die erfindungsgemäße Maschine ermöglicht kontinuierliches Schneiden von gliedrigen Profilen bei höheren Vorschubgeschwindigkeiten und mit Scheiben von niedrigerer Breite, und so spart sie Zeit und limitiert den Abschnitt.

## Patentansprüche

1. Eine mit einem Vorschub des Sägeblatts entlang der Achsen *x*, *y* versehene Kreissägemaschine zum Teilen von Profilstangen, **dadurch gekennzeichnet, dass** sie mit einer programmierbaren Steuerung unabhängiger Vorschübe des Sägeblatts (1) in der Sägeblattebene entlang der Achse (x) und enltang der Achse (y) ausgestattet ist, wobei in einem Speicher der Steuerung eine für das zu teilende Profil optimale Schneideingriffskurve der Achse des Sägeblatts (1) in *x*,*y-*Koordinaten gespeichert ist.

2. Kreissägemaschine nach Anspruch 1, **dadurch gekennzeichnet, dass** in dem Speicher der programmierbaren Steuerung ein Datenbestand von Schneideingriffskurven des Sägeblatts (1) für marktgängige Typen und Größen der Profile gespeichert ist, und die Steuerung mit einem Steller zur Wahl der dem zu teilenden Profil entsprechenden Kurve versehen ist.

## Claims

1. A circular saw for separation of profiled bars equipped with wheel feed along *x*, *y* coordinates, **characterised in that** the saw is equipped with a programmable control device for operation of two mutually independent wheel (1) feeds in the wheel plane, namely a feed along (x) axis and a feed along (y) axis, the control device being equipped with a memory for saving the movement curve of the wheel (1) axis in coordinates x, y optimised for the given profiled bar.

2. A circular saw according to claim 1, **characterised in that** the programmable control device has a memory containing a set of movement curves of the wheel (1) for common profile types and sizes, the control device being equipped with an actuator for the curve selection for the just separated profile.

## Revendications

1. Un scie circulaire pour découper les barres profilées équipée par un dispositif de mouvement du disque d'avance dans les coordonnées x, y, **caractérisée par** la fait qu'elle est munie d'un dispositif de commande programmable pour la commande de déplacement séparement indépendent du disque (1) dans le plan du disque, à savoir d'un déplacement d'avance dans l'axe (x) et d'un déplacement d'avance dans l'axe (y), cependant il est mémorisée dans le mémoire du dispositif de commande dans les coordonnées x, y une courbe de prise du mouvement de l'axe du disque (1) qui est optimale pour le profilé découpé.

2. Le scie circulaire selon la revendication 1, **caractérisée par** la fait qu'un dispositif de commande programmable possède dans le mémoire un fichier mémorisé des courbes de prise du mouvement du disque (1) pour les types et dimensions des profilés courantes et il est muni d'un organe de commande pour la sélection de la courbe appartenant au profilé actuellement découpé.
